# EUROPÄISCHE PATENTSCHRIFT

(11) **EP 1 876 075 B1**
(45) Veröffentlichungstag und Bekanntmachung des Hinweises auf die Patenterteilung: **10.08.2016**
(21) Anmeldenummer: 07012651.1
(22) Anmeldetag: 28.06.2007
(51) Int. Cl.: B60S 5/06, B62B 3/06, B60K 1/04

(54) **Batteriewechselsystem für ein batteriebetriebenes Flurförderzeug**
Battery exchange system for a battery-operated industrial truck
Système de changement de batterie pour un chariot de manutention fonctionnant sur batterie

(30) Priorität: 07.07.2006 DE 102006031461
(43) Veröffentlichungstag der Anmeldung: 09.01.2008
(73) Patentinhaber: Jungheinrich Aktiengesellschaft, 22047 Hamburg (DE)
(72) Erfinder: Niebuhr, Michael, 22941 Bargteheide (DE)
(74) Vertreter: Hauck Patentanwaltspartnerschaft mbB

(56) Entgegenhaltungen:
- EP-A2- 1 396 401
- DE-A1- 4 411 843
- DE-A1- 10 227 000
- FR-A1- 2 024 971
- FR-A1- 2 428 537
- FR-A1- 2 705 926
- US-A- 5 760 569

## Beschreibung

Die Erfindung bezieht sich auf ein batterie-elektrisch betriebenes Flurförderzeug nach dem Oberbegriff des Patentanspruchs 1.

Aus DE 103 33 594 A1 ist ein Batteriewechselsystem für Flurförderzeuge bekannt geworden, bei dem der Fahrzeugrahmen eine Seitenöffnung aufweist zur Aufnahme einer Batterie. Die Batterie befindet sich üblicherweise in einem sog. Batterietrog. Mit dem Batterietrog ist eine Profilleiste verbunden, die an der Unterseite eine Hinterschneidung aufweist. An dem Hubschlitten eines Staplers, an den üblicherweise Gabelarme angehängt werden, sind Abstandshalter angebracht, welche die Profilleiste untergreifen. Daher ist es möglich, eine Batterie mit Hilfe des Hubschlittens aufzunehmen und zu transportieren. Damit dieser Vorgang vonstatten gehen kann, müssen zunächst die Gabelarme vom Lastschlitten entfernt und anschließend die Abstandshalter aufgesetzt werden. Anschließend ist der Stapler so an das andere Fahrzeug heranzufahren, dass mit Hilfe der Abstandshalter die Batterie aufgenommen werden kann. Diese erfordert jedoch, dass die Profilleiste in jedem Falle nicht tiefer liegt als die Höhe der Abstandshalter.

Generell bringt ein beim Gegengewichtsstapler von der Seite her zugänglicher Batterieraum gegenüber nach oben offenen Lösungen Vorteile. Beim Ausbau der Batterie müssen keine Bauteile umständlich innerhalb des Bedienerraums geklappt oder entfernt werden. Die Batterie muß nicht im Bereich des Bedienraumes bewegt werden, was Beschädigungen von empfindlichen Bauteilen in diesem Bereich verhindert. Unnötiges, personenumfeldgefährdendes Anheben der Batterie ist nicht erforderlich. Allerdings ist der Einsatz eines Gabelstaplers mit abnehmbaren Gabelarmen notwendig. Durch die vollständige Trennung von Batterie- und Bedienerraum ist eine gute Abdichtung der Fahrgastzelle in Bezug auf Schall, Regen und Batteriegasen möglich. Die beschriebene bekannte Lösung ist nicht auf alle mit der seitlichen Batterieentnahme verbundenen Varianten der Batteriewartung und des Batterieausbaus und -wechsels anwendbar.

Aus FR-A-2428537 ist ein gattungsgemässes batterie-elektrisch betriebenes Flurförderzeug mit einem Batteriewechselsystem bekannt, umfassend einen Batterietrog. Tragleisten, über welche die Batterie in eine Batterieaufnahme geschoben werden kann, sind einteilig mit dem Batterietrog geformt.

Aus DE-A-4411843 ist ein Batteriewechselsystem für ein batterie-elektrisch betriebenes Flurförderzeug bekannt geworden, bei dem der Rahmen des Flurförderzeugs ein zur Seite des Flurförderzeugs geöffnetes Batteriefach zum seitlichen Ein- und Ausbau eines Batterietroges aufweist. Am Batterietrog ist an mindestens zwei gegenüberliegenden Seiten mindestens ein seitlich auskragendes Tragelement mit nach unten weisender Auflagefläche angebracht. Das Tragelement oder die Tragleiste wird einteilig mit dem Batterietrog gebildet, dessen oberer Seitenwandabschnitt entsprechend umgekantet ist. Schienen unterhalb des Fahrzeugs bilden Auflageflächen für die Tragleisten.

Aus US-A-5760569 ist ebenfalls ein gattungsgemässes Batteriewechselsystem für batterie-elektrisch betriebene Fahrzeuge bekannt geworden. Das relativ flache Batteriepaket weist an gegenüberliegenden Seiten Tragleisten auf, die in den entsprechenden kanalförmigen Ausnehmungen im seitlichen Batteriefach eingeschoben werden können.

Der Erfindung liegt daher die Aufgabe zugrunde, ein Batteriewechselsystem für batteriebetriebene Flurförderzeuge zu schaffen, das trotz des seitlichen Einbaus der Batterie den Einsatz unterschiedlicher Varianten der Batterieentnahme ermöglicht, ohne dass Änderungen am Fahrzeug erforderlich sind.

Diese Aufgabe wird durch die Merkmale des Patentanspruchs 1 gelöst.

Im Gegensatz zum oben angeführten Stand der Technik werden Tragelemente von separaten Tragleisten gebildet, die z.B. den Batterietrog als Rahmen umgeben. Alternativ können auch U-förmige Tragleisten vorgesehen sein, die an gegenüberliegenden Enden, den Trog mit den Schenkeln umgreifend, angebracht sind. Diese haben nach unten weisende Auflageflächen, die über die Kontur des Batterietrogs seitlich überstehen. Im Batteriefach sind komplementäre Stützflächen vorgesehen, auf welchen sich die Auflageflächen abstützen, wenn die Batterie in das Batteriefach eingesetzt ist.

Die Anbringung der Tragleisten erfolgt im oberen Bereich des Troges und zwar derart, dass die Tragelemente nicht über die obere Kante des Batterietroges nach oben hinausstehen. Das Batteriefach ist dabei nur geringfügig breiter als der Batterietrog ausgeführt, wobei die Stützflächen seitlich zurückversetzt liegen.

Üblicherweise haben die Batterietröge sehr großer Batterien, wie sie bei Flurförderzeugen eingesetzt werden, im oberen Bereich sog. Kranösen, um sie mit Hilfe eines Krans zu bewegen und in ein Fahrzeug ein- bzw. aus diesem auszubauen. Erfindungsgemäß werden derartige Ösen verwendet, um die Tragleisten am Batterietrog außen anzubringen. Die Tragelemente weisen einen stiftförmigen seitlichen Vorsprung auf, der durch eine Öse hindurchgeführt ist. In der Öse kann der Vorsprung z.B. durch einen Splint an einem Herausziehen gesichert werden. Eine alternative Ausgestaltung der Erfindung sieht vor, dass der stiftförmige Vorsprung eine federvorgespannte Rastklinke aufweist, die verriegelnd hinter den hinteren Rand der Öse greift, wenn der stiftförmige Vorsprung in die Öse eingeschoben ist.

Die erfindungsgemäße Lösung weist eine Reihe von Vorteilen auf. Die Gesamthöhe des Staplers kann gering ausfallen, um Ein- und Durchfahrten in niedrigen Räumen, Lagerbereichen, Containern, Toren und Durchfahrten zu ermöglichen. Da die Tragleisten an Seitenflächen des Batterietrogs angebracht sind, bestimmt allein die Bauhöhe des Batterietrogs neben der vorgegebenen Höhe des darüber liegenden Bedienerraums und der vorgegebenen Bodenfreiheit die Gesamthöhe des Staplers. Es ragen keine Halter oder andere Bauteile unterhalb oder oberhalb des Batterietrogs hervor.

Bei dem erfindungsgemäßen System kann die Batterie durch ein Herausfallen aus dem Fahrzeug durch eine integrierte Batteriesicherung gesichert werden. Zu diesem Zweck können die Tragleisten Verriegelungsmittel aufweisen, welche mit Verriegelungsmittel im Batteriefach zusammenwirken.

Durch den Einsatz unterschiedlicher Tragleisten können verschieden ausgeprägte Lösungen zur Bewältigung der Probleme beim sog. Batteriehandling umgesetzt werden, ohne dass der Fahrzeugrahmen geändert werden muß. So kann einerseits eine besonders unaufwendige Lösung erzeugt, andererseits eine besonders komfortable Handhabung ermöglicht werden.

Das Batteriefach wird vorzugsweise nach außen geschlossen. Zu diesem Zweck kann an den Tragleisten eine Verkleidung für das Batteriefach angebracht sein. Alternativ kann das Batteriefach durch eine äußere Klappe abgeschlossen werden, die entweder als Tür schwenkbar angehängt oder durch Verschraubung fest am Rahmen des Flurförderzeugs angebracht ist.

Damit die Batterie im Fach sicher aufgenommen ist, sieht eine andere Ausgestaltung der Erfindung mindestens ein Klemmelement im Batteriefach vor, das seitlich am aufgenommenen Batterietrog angreift. Zu diesem Zweck kann ein Gummikeil oder eine federbelastete Klinke vorgesehen werden. Denkbar ist auch ein elektromechanisch oder hydraulisch betätigbares Klemmelement zum wahlweisen Eingriff mit dem Batterietrog.

Wenn das Batteriefach vollständig oder weitgehend nach unten offen ist, können die Gabelarme eines Staplers den Batterietrog von unten erfassen und herausbewegen. Dies unabhängig davon, welchen Abstand die Gabelarme voneinander haben, soweit nicht die Breite des Batterietrogs bzw. des Batteriefachs überschritten wird.

Alternativ ist auch denkbar, zwischen Tragleiste und Batteriefach eine zusammenwirkende Teleskopführung vorzusehen zum schubladenartigen Herausbewegen des Batterietrogs aus dem Batteriefach. Derartige Teleskopführungen sind für Möbelschubladen, Grillgitter in Kochherden usw. an sich bekannt.

Wenn ein Batterietrog mit Hilfe einer solchen Führung seitlich aus dem Batteriefach herausbewegt wird, ergibt sich ein nicht unerhebliches Kippmoment auf den Stapler. Damit er gegen Kippen gesichert ist, kann eine Ausgestaltung der Erfindung vorsehen, dass das Fahrzeug eine Stützvorrichtung aufweist, welche das Flurförderzeug seitlich abstützt, wenn der Batterietrog seitlich herausbewegt ist.

Die Stützvorrichtung kann nach einer anderen Ausgestaltung der Erfindung automatisch in die Stützstellung gebracht werden, wenn der Batterietrog ausgefahren wird.

Zum Entfernen eines Batterietroges aus dem Batteriefach ist auch denkbar, fahrbare Rollenbahnen einzusetzen, welche unter das Batteriefach geschoben werden. Um den Batterietrog auf die Rollbahn aufsetzen zu können, ist bei einer weiteren Ausgestaltung der Erfindung zwischen den Tragflächen und dem Fahrzeugrahmen eine Hebevorrichtung vorgesehen. Zum Betätigen der Hebevorrichtung kann nach Art einer Wagenhebermechanik eine Drehspindel vorgesehen werden. Alternativ kann auch ein externer Antrieb mit einem Akkuschrauber oder einem Pressluftschrauber vorgesehen werden. Für die Aufnahme durch die Rollenbahn ist die ganze Unterseite des Batterietroges frei. Zwischen Batterietrog und den Wänden des Batteriefachs kann ein Spalt vorgesehen werden, durch den seitliche Führungsfläche von Rollbahnen oder Wechselvorrichtungen den Ein- und Ausbau erleichtern. Mit Hilfe einer Rollenbahn kann die Batterie unmittelbar an eine niveaugleiche horizontale Rollenbahninstallation übergeben werden.

Eine alternative Vorkehrung für einen Batteriewechsel besteht erfindungsgemäß darin, dass die Tragleisten zwei parallel beabstandete Einschubtaschen aufweisen mit Öffnungen, die zur Öffnung des Batteriefachs weisen. Es ist ferner ein C-förmiger Haken vorgesehen mit zwei parallel beabstandeten Armen im unteren Bereich, die in die Einschubtaschen einfahren. Ein nach oben weisender Arm des Hakens kann an einem oberhalb verlaufenden Hebezeug eingehängt werden.

Nach dem Einbau des Batterietrogs muß die Verbindung des Bordnetzes mit der Batterie hergestellt werden. In diesem Zusammenhang sieht eine weitere Ausgestaltung der Erfindung vor, dass in eine Tragleiste eine erste Kontaktanordnung integriert ist, die mit einer fahrzeugseitigen Kontaktanordnung zusammenwirkt, wenn der Batterietrog in das Batteriefach eingeführt wird. Vorzugsweise bilden die Kontaktanordnungen ein Schnellkupplungssystem, das eine automatische Kontaktierung bewirkt. Hierbei ist ein schneller Wechsel der Batterie möglich, ohne dass ein Trennen eines Batteriesteckers erforderlich ist. In diesem Fall ist die Ladestation zweckmäßigerweise mit einer Kontaktanordnung zu versehen, welche der zweiten Kontaktanordnung entspricht, um den schnellen Anschluß der Batterie an das Ladegerät zu ermöglichen.

Ausführungsbeispiele der Erfindung werden nachfolgend anhand von Zeichnungen näher erläutert:
- Fig. 1: zeigt perspektivisch ein Flurförderzeug mit seitlichem Batteriefach und aufgenommenem Batterietrog,
- Fig. 2: zeigt perspektivisch vergrößert die Seitenansicht des Flurförderzeugs nach Fig. 1 mit leerem Batteriefach,
- Fig. 3: zeigt das Flurförderzeug nach Fig. 1 mit herausbewegtem Batterietrog in einer abgewandelten Ausführungsform,
- Fig. 4: zeigt eine ähnliche Ansicht wie Fig. 3 mit einer Möglichkeit zur Entnahme des Batterietrogs mit einer Teleskopführung,
- Fig. 5: zeigt einen Schnitt durch eine Tragleiste eines Batterietrogs im Bereich ihrer Befestigung am Rand des Batterietrogs,
- Fig. 6: zeigt eine ähnliche Darstellung wie Fig. 3 mit einer anderen Ausführungsform von Tragleisten,
- Fig. 7: zeigt teilweise einen Horizontalschnitt durch ein Flurförderzeug mit aufgenommenem Batterietrog und eine elektrische Verbindung mit dem Bordnetz,
- Fig. 8: zeigt perspektivisch eine andere Ausführungsform eines Batterieraums für ein Flurförderzeug,
- Fig. 9: zeigt perspektivisch die Seitenansicht eines Flurförderzeugs mit aufgenommenem Batterietrog und Verschlussklappe.

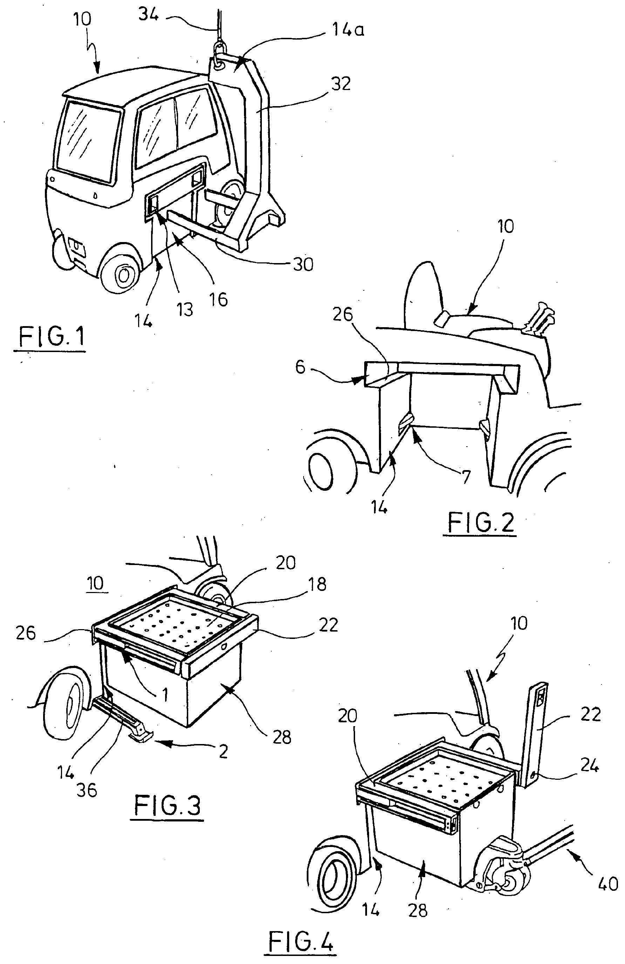

In den Figuren 1 bis 4 ist ein Flurförderzeug 10 angedeutet, das vom üblichen Aufbau ist. Es handelt sich im gezeigten Fall um einen Gegengewichtsstapler. Einzelheiten von diesem werden nicht erläutert.

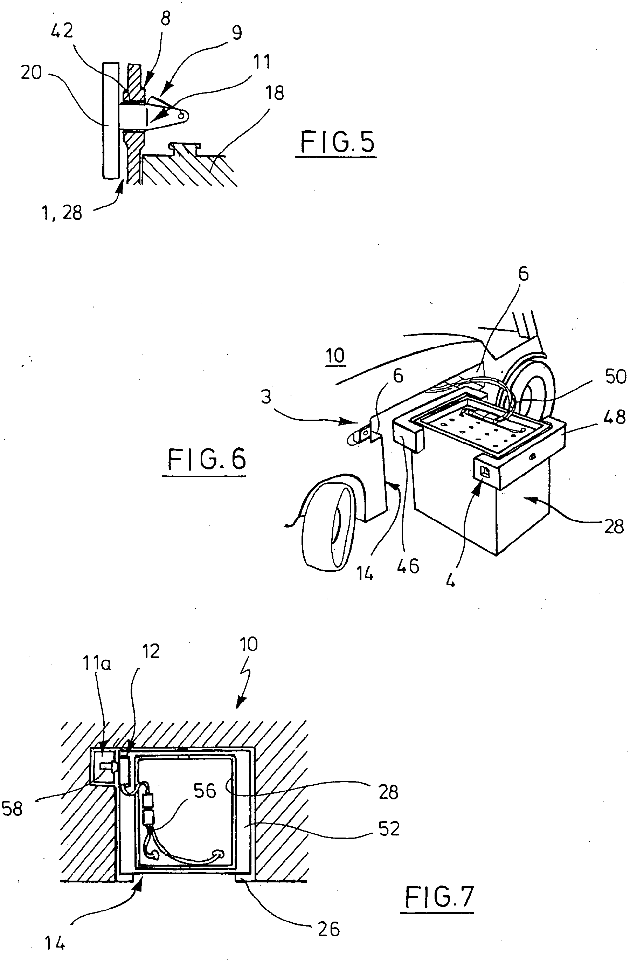

Wie aus den Figuren 1 bis 4 hervorgeht, weist das Flurförderzeug seitlich geöffnet ein Batteriefach 14 auf, zur Aufnahme eines Batterietroges 16. Wie aus den Figuren 3 und 4 hervorgeht, ist der Batterietrog, der mit seinem Rand 8 (Fig. 5) über einer Batterie 18 übersteht, mit rahmenartigen Tragleisten versehen. In Figur 3 und 4 erkennt man ein U-förmiges Rahmenteil 20, welches den Batterietrog von hinten und seitlich umgibt. In der Höhe erstreckt sich das Rahmenteil 20 nicht höher als der Rand 8 des Batterietrogs. An den freien Enden stoßen die Schenkel des U-förmigen Rahmenteils 20 an eine Tragleiste 22 an, das - wie in Fig. 4 bei 24 zu erkennen ist - um eine horizontale Achse, die sich durch den in den Figuren 3 und 4 rechten Schenkel erstreckt, nach oben verschwenkbar ist. Das Rahmenteil 20 und die Tragleiste 22 weisen nach unten weisende horizontale Auflageflächen (nicht zu sehen) auf, die annähernd in einer Ebene liegen.

Wie insbesondere in Figur 2 zu erkennen, ist das Batteriefach 14 im oberen Bereich mit zu beiden Seiten sich kanalartigen erstreckenden Erweiterungen 6 versehen, welche horizontale nach oben weisende Stützflächen 26 bilden. Ein Batterietrog, wie er in den Figuren 3 und 4 mit 28 bezeichnet und gezeichnet ist, kann annähernd formschlüssig in das Batteriefach 14 eingeschoben werden, wobei die Vorderseite des Batterietroges 28 etwas gegenüber der Außenhaut des Fahrzeugs 10 zurückliegt, damit das Batteriefach 14 durch eine Abdeckung, Verkleidung oder Klappe abgeschlossen werden kann (nicht gezeigt). Das Batteriefach 14 ist nach unten vollständig offen, sodass ein Stapler mit seiner Gabel unter das Fach 14 fahren und eine Batterie einschieben oder aus dem Fach 14 entfernen kann. In Figur 1 ist zu erkennen, dass ein ähnlicher Rahmen, wie er in den Figuren 3 und 4 dargestellt ist, an der Vorderseite der Tragleisten mit Einschubtaschen 13 versehen ist, die sich eine vorgegebene Strecke in den Rahmen hinein erstrecken. In die Taschen 13 können parallele Arme 30 eines C-förmigen Hakens 14a eingeschoben werden, wobei die Arme mit einem vertikalen Tragarm 32 verbunden sind, der - wie bei 34 dargestellt ist - an einem Hebezug angehängt werden kann. Mit Hilfe des Hakens 14a kann daher der aufgenommene Batterietrog eingebaut bzw. ausgebaut werden.

In Figur 2 ist zu erkennen, dass im Batteriefach 14 Klinken 7 an gegenüberliegenden Seiten angeordnet sind. Die Klinken 7 sind von einer Feder (nicht gezeigt) vorgespannt und treten in Eingriff mit den zugekehrten Seiten des eingeschobenen Batterietroges, um diesen seitlich zu begrenzen und ein Anschlagen an die Seitenwände des Batteriefachs 14 zu verhindern.

In den Figuren 3 und 4 ist ferner gezeigt, dass an den Schenkeln des U-förmigen Rahmenteils 20 eine Teleskopführung 26 vorgesehen ist, welche mit entsprechenden Führungsmitteln in den Erweiterungen 6 des Batteriefachs 14 zusammenwirken. Auf diese Weise kann der Batterietrog aus dem Batteriefach 14 herausbewegt werden, beispielsweise zu Wartungs- und Ladezwecken.

Derartige Teleskopführungen 26 sind zum Beispiel bei Schubladen in Möbeln bekannt geworden.

Damit das Fahrzeug 10 nicht kippt, ist ein Ausleger 36 vorgesehen, der das Fahrzeug 10 seitlich abstützt, wenn der Batterietrog 28, wie in Figur 3 gezeigt ist, seitlich neben das Fahrzeug 10 gefahren wird. Der Ausleger 36 kann von Hand betätigt oder auch automatisch ausgefahren werden, wenn der Batterietrog 28 nach außen geschoben wird. Umgekehrt kann der Ausleger 36 automatisch eingefahren werden, wenn die Batterie in das Batteriefach 14 eingeschoben wird.

Wenn es gleichwohl erforderlich ist, den Batterietrog 28 vom Fahrzeug 10 zu lösen, wird die Tragleiste 22 nach oben geschwenkt, wie in Figur 4 dargestellt. Vor dem Schwenken wird die Verbindung zwischen dem U-förmigen Rahmen und dem Batterietrog 28 gelöst, sodass mit Hilfe eines Handgabelhubwagens 40 oder dergleichen die Batterie entfernt werden kann.

Die Befestigung des die Tragleisten aufweisenden Rahmenteils 20 oder auch der Tragleiste 22 ist in Figur 5 dargestellt. Es ist mindestens ein dornartiger Vorsprung 11 vorgesehen, der sich durch eine Öffnung 42 im Rand 8 des Batterietroges 1 bzw. 28 erstreckt. In dem dornartigen Vorsprung 11 ist federvorbelastet eine Klinke 9 gelagert, welche normalerweise die in Figur 5 gezeigte Position einnimmt, in welcher sie de n von der Tragleiste 20 abgewandten Rand der Öffnung 12 hintergreift. Die Außenseite der Klinke 9 ist mit einer Schrägfläche versehen, so dass der dornartige Vorsprung 11 ohne weiteres durch die Öffnung 12 hindurchgeführt werden kann.

In Figur 6 ist gezeigt, wie zwei U-förmige Tragleisten 46, 48 von gegenüberliegenden Seiten den Batterietrog 28 mit Schenkeln umgreifen. Die Oberseite der Tragleisten 46, 48 ist wiederum bündig mit dem oberen Rand des Batterietroges 28. Die Befestigung der Tragleisten 46, 48 erfolgt in gleicher Weise wie dies in Verbindung mit Fig. 5 dargestellt ist.

In Fig. 6 erkennt man außerdem ein Verriegelungsmittel 3 im Bereich einer Erweiterung 6 des Batteriefachs 14. Diese wirkt mit einem Verriegelungsmittel 4 in einem Schenkel der U-förmigen Tragleiste 48 zusammen, wenn der Batterietrog 28 vollständig in das Batteriefach 14 eingeführt ist. Auf diese Weise wird ein Herausrutschen oder ein -fallen des Batterietroges 28 aus dem Batteriefach 14 verhindert.

In Fig. 6 ist bei 50 ein Batteriekabel angedeutet, das von der Batterie über einen nicht gezeigten Stecker zu einem Anschluß des Bordnetzes führt. In Fig. 7 ist gezeigt, dass es eines solchen Kabels nicht bedarf.

In Fig. 7 ist eine Draufsicht auf den Batterietrog 28 innerhalb des Batteriefachs 14 dargestellt, wobei zu erkennen ist, dass die Tragleisten wiederum von einem umlaufenden Rahmen 52 gebildet sind. Man erkennt ferner in Figur 7, dass in einem Längsabschnitt des Rahmens 52 eine erste Kontaktanordnung 12 integriert ist, die über ein Verbindungskabel 56 mit den Batterieanschlüssen verbunden ist. Im Bereich der Erweiterung 6 ist eine zweite Kontaktanordnung 11a eingebaut, die - was nicht gezeigt ist - mit dem Bordnetz verbunden ist und zwei bewegliche Kontaktstifte aufweist, von denen einer bei 58 gezeigt ist. Wird der Batterietrog 28 in das Fach 14 eingeschoben, kommen die Kontakte der Kontaktanordnungen 12 und 11a automatisch in Eingriff, sodass dadurch die Verbindung mit dem Bordnetz hergestellt ist, ohne dass zusätzliche Handgriffe erforderlich werden.

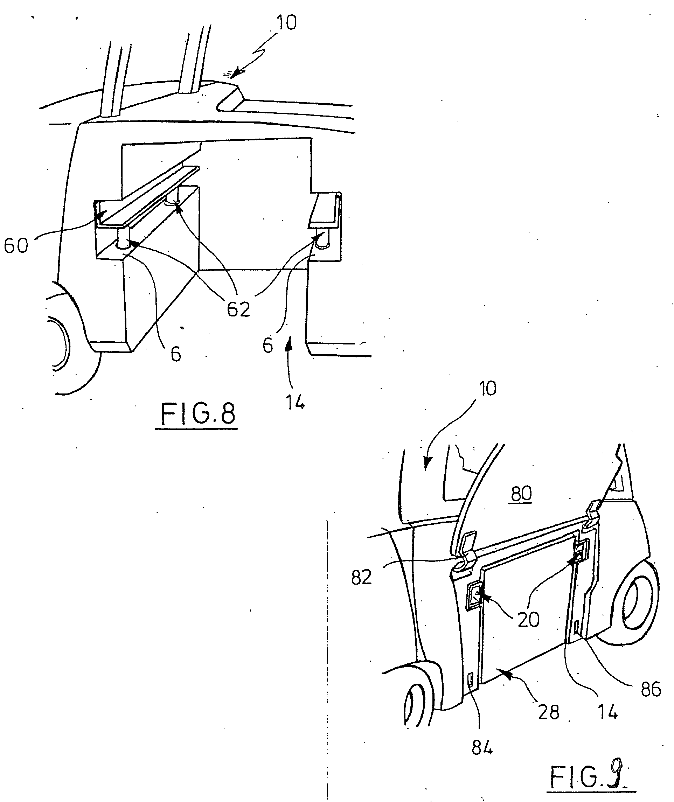

In Fig. 8 ist das Batterieaufnahmefach 14 im Flurförderzeug 10 angedeutet, mit seitlichen länglichen Ausnehmungen 6, wie sie insbesondere in Verbindung mit Figur 2 bereits erwähnt wurden. Man erkennt in den Ausnehmungen Winkelprofile 60, welche von Hydraulikstempeln 62 abgestützt sind. Mit Hilfe der Hydraulikstempel 62 können die Winkelprofile 60 angehoben werden. Befindet sich nun ein Batterietrog 28 mit den seitlichen Tragleisten, wie sie bereits weiter oben beschreiben worden sind, auf den Winkelprofilen 60, dann kann er um eine gewisse Strecke angehoben werden, damit ein Unterschieben einer Rollbahn und das Absenken auf die Rollbahn ermöglicht wird, um die aufgenommene Batterie herauszubewegen.

In Figur 9 ist angedeutet, wie mit einer Klappe 80, die bei 82 über Scharniere am Flurförderzeug angelenkt ist, das Batteriefach 14 nach außen abgedeckt werden kann. Verriegelungsöffnungen 84, 86 an beiden Seiten des Batterieraums 14 dienen zur Festlegung der Klappe 80 in einer Schließstellung.

## Patentansprüche

1. Batterie-elektrisch betriebenes Flurförderzeug mit einem Batteriewechselsystem umfassend einen Batterietrog (16, 28), bei dem der Rahmen des Flurförderzeugs ein zur Seite des Flurförderzeugs geöffnetes Batteriefach (14) zum seitlichen Ein- und Ausbau des Batterietrogs aufweist, wobei am Batterietrog (16, 28) an mindestens zwei gegenüberliegenden Seiten mindestens jeweils eine seitlich auskragende Tragleiste (20, 22, 46, 48) mit nach unten weisender Auflagefläche angebracht ist und das Batteriefach (14) auf gegenüberliegenden Seiten horizontale parallel beabstandete Stützflächen (26) aufweist, auf denen sich die Tragleisten mit ihren Auflageflächen abstützen, wenn der Batterietrog (16, 28) in das Batteriefach (14) eingesetzt ist, **dadurch gekennzeichnet, dass** der Batterietrog (28) auf mindestens zwei gegenüberliegenden Seiten am oberen Rand (8) mindestens eine Öse (42) aufweist und die Tragleisten (20) an den Ösen (42) befestigt sind, und die Tragleisten (20) einen stiftförmigen Vorsprung (11) aufweisen, der durch eine Öse (42) hindurchführbar ist und der stiftförmige Vorsprung durch einen Splint oder dergleichen festlegbar ist oder eine federvorgespannte Rastklinke (9) aufweist, die verriegelnd hinter den hinteren Rand der Öse (42) greift, wenn der stiftförmige Vorsprung (11) in die Öse (42) eingeschoben wird.

2. Flurförderzeug nach Anspruch 1, **dadurch gekennzeichnet, dass** die Tragleisten einen den Batterietrog (28) umgebenden Rahmen (20, 22) bilden.

3. Flurförderzeug nach Anspruch 1, **dadurch gekennzeichnet, dass** als Tragleisten zwei U-förmige Tragelemente (46, 48) an gegenüberliegenden Seiten am Batterietrog (28) angebracht sind.

4. Flurförderzeug nach einem der Ansprüche 1 bis 3, **dadurch gekennzeichnet, dass** die Tragleisten im oberen Bereich des Batterietroges angebracht sind und nach oben annähernd mit dessen oberem Rand abschließen, zumindest diesen nicht überragen.

5. Flurförderzeug nach einem der Ansprüche 1 bis 4, **dadurch gekennzeichnet, dass** die Auflageflächen zwischen der oberen und der unteren Seite des Batterietroges angeordnet sind.

6. Flurförderzeug nach einem der Ansprüche 1 bis 5, **dadurch gekennzeichnet, dass** die Breite des Batteriefaches (14) nur geringfügig größer ist als die Abmessung des Batterietroges (28) und die Stützflächen (26) seitlich zurückgesetzt verlaufen.

7. Flurförderzeug nach einem der Ansprüche 1 bis 6, **dadurch gekennzeichnet, dass** an der der Öffnung des Batteriefachs (14) zugekehrten Tragleiste eine Verkleidung für das Batteriefach angebracht ist.

8. Flurförderzeug nach einem der Ansprüche 1 bis 7, **dadurch gekennzeichnet, dass** die seitliche Öffnung des Batteriefachs (14) durch eine Klappe (80) abschließbar ist, die entweder schwenkbar oder fest am Rahmen des Flurförderzeugs (10) angebracht ist.

9. Flurförderzeug nach einem der Ansprüche 1 bis 8, **dadurch gekennzeichnet, dass** im Batteriefach (14) mindestens ein Klemmelement (7) vorgesehen ist, das seitlich an einen aufgenommenen Batterietrog angreift.

10. Flurförderzeug nach Anspruch 9, **dadurch gekennzeichnet, dass** das Klemmelement von einem Gummikeil oder einer federbelasteten Klinke (7) gebildet ist.

11. Flurförderzeug nach Anspruch 9, **dadurch gekennzeichnet, dass** das Klemmelement elektromechanisch oder hydraulisch betätigbar ist zum wahlweisen Eingriff mit dem Batterietrog.

12. Flurförderzeug nach einem der Ansprüche 1 bis 11, **dadurch gekennzeichnet, dass** das Batteriefach (14) nach unten so weit offen ist, dass die Gabelarme eines Staplers den Batterietrog von unten erfassen können.

13. Flurförderzeug nach einem der Ansprüche 1 bis 12, **dadurch gekennzeichnet, dass** zwischen den Tragleisten und dem Batteriefach eine zusammenwirkende Teleskopführung (1) vorgesehen ist zum schubladenartigen Herausbewegen des Batterietroges (28) aus dem Batteriefach (14).

14. Flurförderzeug nach Anspruch 13, **dadurch gekennzeichnet, dass** den Tragleisten und/oder dem Fahrzeug eine Stützvorrichtung (36) zugeordnet ist, welche das Flurförderzeug (10) seitlich abstützt, wenn der Batterietrog (28) seitlich ausgefahren ist.

15. Flurförderzeug nach Anspruch 14, **dadurch gekennzeichnet, dass** die Stützvorrichtung so ausgebildet ist, dass sie automatisch in eine Stützstellung gebracht wird, wenn der Batterietrog (28) ausgefahren wird.

16. Flurförderzeug nach einem der Ansprüche 1 bis 15, **dadurch gekennzeichnet, dass** zwischen den Stützflächen (60) und den Tragleisten (20) eine Hebevorrichtung (60, 62) angeordnet ist.

17. Flurförderzeug nach einem der Ansprüche 1 bis 16, **dadurch gekennzeichnet, dass** die Tragleisten zwei parallel beabstandete Einschubtaschen (13) aufweisen, deren Öffnung zur Öffnung des Batteriefaches (14) weist für einen C-förmigen Haken (14), der mit zwei parallel beabstandeten Armen (30) in die Einschubtaschen (14) einführbar ist.

18. Flurförderzeug nach einem der Ansprüche 1 bis 17, **dadurch gekennzeichnet, dass** eine Tragleiste eine integrierte erste Kontaktanordnung (12) aufweist, die mit einer fahrzeugseitigen zweiten Kontaktanordnung (11a) zusammenwirkt, wenn der Batterietrog (28) in das Batteriefach (14) eingeführt wird.

19. Flurförderzeug nach Anspruch 18, **dadurch gekennzeichnet, dass** die beiden Kontaktanordnungen (12, 11) ein Schnellkupplungssystem bilden, das ein automatisches Kontaktieren und Trennen der Kontakte bewirkt.

20. Flurförderzeug nach einem der Ansprüche 1 bis 19, **dadurch gekennzeichnet, dass** an einer Tragleiste (48) erste Verriegelungsmittel (4) vorgesehen sind, die mit zweiten Verriegelungsmitteln (3) im Batteriefach (14) zusammenwirken.

21. Flurförderzeug nach Anspruch 20, **dadurch gekennzeichnet, dass** die Verriegelungsmittel (4, 3) so ausgebildet und angeordnet sind, das sie von außen entriegelbar sind.

## Claims

1. A battery-electric operated industrial truck with a battery change system comprising a battery tray (16, 28), wherein the frame of the industrial truck has a battery compartment (14), opened towards the side of the industrial truck for sideways installation and removal of the battery tray, wherein at least one laterally overhanging bearing bar (20, 22, 46, 48) with downward pointing bearing surface is attached on the battery tray (16, 28) on at least two opposing sides at a time, and the battery compartment (14) has horizontal parallel spaced support surfaces (26) at opposing sides on which the bearing bars are supported with their bearing surfaces when the battery tray (16, 28) is inserted into the battery compartment (14), **characterised in that** the battery tray (28) has at least one eyelet (42) on at least two opposing sides on the upper edge (8) and the bearing bars (20) are fixed on the eyelets (42) and the bearing bars (20) have a pin-like projection (11) which can be guided through an eyelet (42) and the pin-like projection can be locked by a splint or the like or has a spring-biased latch (9) which reaches behind the rear edge of the eyelet (42) in a locking manner when the pin-like projection (11) is being inserted into the eyelet (42).

2. The industrial truck according to claim 1, **characterised in that** the bearing bars form a frame (20, 22) surrounding the battery tray (28).

3. The industrial truck according to claim 1, **characterised in that** two U-shaped bearing elements (46, 48) are fixed as bearing bars on the battery tray (28) at opposing sides.

4. An industrial truck according to any one of claims 1 to 3, **characterised in that** the bearing bars are fixed in the upper region of the battery tray and end towards the upper side approximately with the upper edge thereof, at least do not project above it.

5. An industrial truck according to any one of claims 1 to 4, **characterised in that** the bearing surfaces are arranged between the upper and the lower side of the battery tray.

6. An industrial truck according to any one of claims 1 to 5, **characterised in that** the width of the battery compartment (14) is only a little bit greater than the dimension of the battery tray (28), and the support surfaces (26) are set back laterally.

7. An industrial truck according to any one of claims 1 to 6, **characterised in that** a lining for the battery compartment is attached on the bearing bar facing the opening of the battery compartment (14).

8. An industrial truck according to any one of claims 1 to 7, **characterised in that** the lateral opening of the battery compartment (14) can be closed by a flap (80), which is either pivotally or fixedly attached on the frame of the industrial truck (10).

9. An industrial truck according to any one of claims 1 to 8, **characterised in that** at least one clamping element (7) is provided in the battery compartment (14), which engages laterally on a received battery tray.

10. The industrial truck according to claim 9, **characterised in that** the clamping element is formed by a rubber wedge or a spring-biased ratchet (7).

11. The industrial truck according to claim 9, **characterised in that** the clamping element can be actuated electro-mechanically or hydraulically for optional engagement with the battery tray.

12. An industrial truck according to any one of claims 1 to 11, **characterised in that** the battery compartment (14) is open towards the downside so far that the fork arms of a stacker can reach the battery tray from the downside.

13. An industrial truck according to any one of claims 1 to 12, **characterised in that** a cooperating telescopic slide device (1) is provided between the bearing bars and the battery compartment for moving the battery tray (28) out of the battery compartment (14) like a drawer.

14. The industrial truck according to claim 13, **characterised in that** a support device (36) is associated to the bearing bars and/or the vehicle, which laterally supports the industrial truck (10) when the battery tray (28) is laterally drawn outward.

15. The industrial truck according to claim 14, **characterised in that** the support device is made such that it is automatically brought into a support position when the battery tray (28) is being drawn outward.

16. An industrial truck according to any one of claims 1 to 15, **characterised in that** a lifting device (60, 62) is arranged between the support surfaces (60) and the bearing bars (20).

17. An industrial truck according to any one of claims 1 to 16, **characterised in that** the bearing bars have two parallel spaced insertion pockets (13), whose openings point towards the opening of the battery compartment (14) for a C-shaped hook (14) which can be inserted into the insertion pockets (14) with two parallel spaced arms (30).

18. An industrial truck according to any one of claims 1 to 17, **characterised in that** one bearing bar has an integrated first contact assembly (12) which cooperates with a second contact assembly (11a) at the vehicle side when the battery tray (28) is being inserted into the battery compartment (14).

19. The industrial truck according to claim 18, **characterised in that** the two contact assemblies (12, 11) form a quick coupling system which effects automatic contacting and separation of the contacts.

20. An industrial truck according to any one of claims 1 to 19, **characterised in that** first locking means (4) are provided at one bearing bar (48) which cooperate with second locking means (3) in the battery compartment (14).

21. The industrial truck according to claim 20, **characterised in that** the locking means (4, 3) are formed and arranged such that they can be unlocked from the outside.

## Revendications

1. Chariot de manutention fonctionnant électriquement par batterie avec un système de remplacement de batterie comportant un châssis de batterie (16, 28), dans lequel le cadre du chariot de manutention a un protège batterie (14), ouvert vers le côte du chariot de manutention pour montage et démontage latéral du châssis de batterie, et dans lequel au moins une barre de support (20, 22, 46, 48) en porte-à-faux latérale avec surface d'appui tournée vers le bas est à chaque fois fixée sur le châssis de batterie (16, 28) dans au moins deux côtés opposés, et le protège batterie (14) a des surfaces de support (26) horizontalement espacées dans des côtés opposés sur lesquelles les barres de support s'appuient avec leurs surfaces d'appui quand le châssis de batterie (16, 28) est inséré dans le protège batterie (14), **caractérisé en ce que** le châssis de batterie (28) a au moins un oeillet (42) dans au moins deux côtés opposés sur le bord supérieur (8) et les barres de support (20) sont fixées dans les oeillets (42) et les barres de support (20) ont une saillie en forme de broche (11) qui peut être guidée à travers un oeillet (42) et la saillie en forme de broche peut être verrouillée par une goupille ou chose pareille ou comporte un cliquet d'arrêt (9) précontraint par ressort qui est en prise par arrière par-delà du bord arrière de l'oeillet (42) en verrouillant quand on insère la saillie en forme de broche (11) dans l'oeillet (42).

2. Chariot de manutention selon la revendication 1, **caractérisé en ce que** les barres de support forment un cadre (20, 22) entourant le châssis de batterie (28).

3. Chariot de manutention selon la revendication 1, **caractérisé en ce que** deux éléments de support (46, 48) en forme d'U sont fixés comme barres de support sur le châssis de batterie (28) dans des côtés opposés.

4. Chariot de manutention selon l'une quelconque des revendications 1 à 3, **caractérisé en ce que** les barres de support sont fixées dans une zone supérieure du châssis de batterie et finissent vers le haut approximativement dans le bord supérieur de cela, au moins ne pas le dépassant en hauteur.

5. Chariot de manutention selon l'une quelconque des revendications 1 à 4, **caractérisé en ce que** les surfaces d'appui sont disposées entre les côtés supérieur et inférieur du châssis de batterie.

6. Chariot de manutention selon l'une quelconque des revendications 1 à 5, **caractérisé en ce que** la largeur du protège batterie (14) est seulement minimalement plus grande que les dimensions du châssis de batterie (28), et les surfaces de support (26) sont latéralement en retrait.

7. Chariot de manutention selon l'une quelconque des revendications 1 à 6, **caractérisé en ce que** un revêtement pour le protège batterie est fixé sur la barre de support vis-à-vis de l'ouverture du protège batterie (14).

8. Chariot de manutention selon l'une quelconque des revendications 1 à 7, **caractérisé en ce que** l'ouverture latérale du protège batterie (14) peut être fermée par un clapet (80), qui est fixé sur le cadre du chariot de manutention (10) de manière soit pivotante soit fixe.

9. Chariot de manutention selon l'une quelconque des revendications 1 à 8, **caractérisé en ce que** au moins un organe de serrage (7) est prévu dans le protège batterie (14), qui s'engage latéralement avec un châssis de batterie reçu.

10. Chariot de manutention selon la revendication 9, **caractérisé en ce que** l'organe de serrage est formé par une coque faite en caoutchouc ou un cliquet monté à ressort (7).

11. Chariot de manutention selon la revendication 9, **caractérisé en ce que** l'organe de serrage peut être mis en action de manière électromécanique ou hydraulique pour engagement avec le châssis de batterie au choix.

12. Chariot de manutention selon l'une quelconque des revendications 1 à 11, **caractérisé en ce que** le protège batterie (14) est ouvert vers le bas à un degré que les bras de fourche d'un chariot élévateur peuvent saisir le châssis de batterie à partir du bas.

13. Chariot de manutention selon l'une quelconque des revendications 1 à 12, **caractérisé en ce que** un guide télescopique (1) est prévu entre les barres de support et le protège batterie pour retraire le châssis de batterie (28) du protège batterie (14) à la manière de tiroir.

14. Chariot de manutention selon la revendication 13, **caractérisé en ce que** un dispositif de support (36) est associé aux barres de support et/ou au véhicule qui latéralement supporte le chariot de manutention (10) quand le châssis de batterie (28) est latéralement déplacé vers l'extérieur.

15. Chariot de manutention selon la revendication 14, **caractérisé en ce que** le dispositif de support est fait tellement qu'il est automatiquement mené en une position de support quand on déplace le châssis de batterie (28) vers l'extérieur.

16. Chariot de manutention selon l'une quelconque des revendications 1 à 15, **caractérisé en ce que** un dispositif de levage (60, 62) est disposé entre les surfaces de support (60) et les barres de support (20).

17. Chariot de manutention selon l'une quelconque des revendications 1 à 16, **caractérisé en ce que** les barres de support ont deux poches d'insertion (13) espacées en parallèle, dont les ouvertures montrent vers l'ouverture du protège batterie (14) pour un crochet en forme d'U (14) qui peut être inséré dans les poches d'insertion (14) avec deux bras (30) espacés en parallèle.

18. Chariot de manutention selon l'une quelconque des revendications 1 à 17, **caractérisé en ce que** une barre de support comporte un premier assemblage de contact intégré (12) qui coopère avec un deuxième assemblage de contact (11a) au côté véhicule quand on insert le châssis de batterie (28) dans le protège batterie (14).

19. Chariot de manutention selon la revendication 18, **caractérisé en ce que** les deux assemblages de contact (12, 11) forment un système de raccords rapides qui effectue un contact et une séparation des contacts automatiques.

20. Chariot de manutention selon l'une quelconque des revendications 1 à 19, **caractérisé en ce que** premiers moyens de verrouillage (4) sont prévus dans une barre de support (48) qui coopèrent avec deuxièmes moyens de verrouillage (3) dans le protège batterie (14).

21. Chariot de manutention selon la revendication 20, **caractérisé en ce que** les moyens de verrouillage (4, 3) sont formés et arrangés tellement qu'ils peuvent être déverrouillés de l'extérieur.
